# EUROPEAN PATENT APPLICATION

(11) **EP 3 125 179 A1**
(43) Date of publication of application: **01.02.2017**
(21) Application number: 16178867.4
(22) Date of filing: 11.07.2016
(51) Int. Cl.: G06Q 10/10, G06Q 50/00, G06F 17/30

(54) **PHOTO SHARING METHOD AND DEVICE**

(30) Priority: 31.07.2015 CN 201510462784
(71) Applicant: Xiaomi Inc., Beijing 100085 (CN)
(72) Inventor: ZHANG, Tao, Beijing, Beijing 100085 (CN); CHEN, Zhijun, Beijing, Beijing 100085 (CN); LONG, Fei, Beijing, Beijing 100085 (CN)
(74) Representative: Sackin, Robert

(57) **Abstract**

The present disclosure relates to a photo sharing method and device. The method includes: receiving (101) a party photo sharing request sent by a terminal of an initiator, where the party photo sharing request includes a party marker and an initiator user account; acquiring (102), from a cloud album corresponding to the initiator user account, a first party photo set corresponding to the party marker; acquiring (103), according to each contact contained in a first contact list corresponding to the initiator user account, each second party photo set marked with the party marker and each contact respectively corresponding to the each second party photo set; and sending (105) a to-be-shared party photo set including the first party photo set and the each second party photo set to the initiator and the each contact respectively corresponding to the each second party photo set according to contact information of the initiator and contact information of the each contact respectively corresponding to the each second party photo set recorded in the first contact list, thereby implementing sharing of party photos and improving the efficiency in sharing the party photos.

## Description

### TECHNICAL FIELD

The present disclosure generally relates to the field of communications technologies, and more particularly, to a photo sharing method and device.

### BACKGROUND

Intelligent terminals have become electronic devices that are essential to daily life. When people go out for a party or for play, they use a terminal device such as a smart mobile phone to take photos. The intelligent terminal has become a main camera device.

In a party with friends, each participant may take some photos, and share these photos with others in the party. At present, this is implemented by manually sending photos to each other. For example, A, B, C and D participate in a party and respectively take some party photos. A respectively sends photos to B, C and D by means of communication modes such as WeChat™ or a short message or the like. In a similar way, B may also send photos to A, C and D, and so does C or D.

### SUMMARY

The present disclosure provides a photo sharing method and device in accordance with the claims which follow. The arrangements disclosed overcome the defect of low efficiency in sharing and processing party photos.

According to a first aspect of the embodiments of the present disclosure, a photo sharing method is provided, including:
receiving a party photo sharing request sent by a terminal of an initiator, where the party photo sharing request includes a party marker and an initiator user account;
acquiring, from a cloud album corresponding to the initiator user account, a first party photo set corresponding to the party marker;
acquiring, according to each contact contained in a first contact list corresponding to the initiator user account, each second party photo set marked with the party marker and each contact respectively corresponding to the each second party photo set;
acquiring a to-be-shared party photo set including the first party photo set and the each second party photo set; and
sending the to-be-shared party photo set to the initiator and the each contact respectively corresponding to the each second party photo set according to contact information of the initiator and contact information of the each contact respectively corresponding to the each second party photo set recorded in the first contact list.

The acquiring, according to each contact contained in a first contact list corresponding to the initiator user account, each second party photo set marked with the party marker and each contact respectively corresponding to the each second party photo set includes:
respectively determining each contact user account corresponding to the each contact contained in the first contact list;
respectively determining whether a second party photo set marked with the party marker is present in a cloud album corresponding to the each contact user account; and
acquiring, if the second party photo set marked with the party marker is present, the each second party photo set, and determining each contact respectively corresponding to the each second party photo set according to the first contact list.

Further, before receiving a party photo sharing request sent by a terminal of an initiator, the method further includes:
receiving a storage request sent by a user terminal, where the storage request includes a to-be-stored party photo set marked with a party marker and a user account; and
storing the to-be-stored party photo set in a cloud album corresponding to the user account.

By means of the foregoing solution, after a party photo sharing request carrying a user account and a party marker sent by a certain party participant (referred to as an initiator) is received, in one hand, a first party photo set corresponding to the party marker is acquired from a cloud album corresponding to the initiator user account; in the other hand, each second party photo set corresponding to the party marker is acquired from each cloud album of each contact according to the each contact contained in a first contact list corresponding to the initiator user account, and the each contact corresponding to the each second party photo set is respectively determined according to the first contact list. Finally, the to-be-shared party photo set including the first party photo set and the each second party photo set is sent to the initiator and the each contact respectively corresponding to the each second party photo set according to contact information of the initiator and contact information of the each contact respectively corresponding to the each second party photo set recorded in the first contact list, thereby implementing the sharing of party photos and improving the efficiency in sharing the party photos.

Further, after acquiring the to-be-shared party photo set including the first party photo set and the each second party photo set, the method further includes:
acquiring, by means of face recognition, a first face image set contained in the first party photo set in the to-be-shared party photo set and each second face image set respectively contained in the each second party photo set;
determining whether a second face image set weakly correlated with the first face image set is present among the each second face image set; and
deleting from the to-be-shared party photo set, if the second face image set weakly correlated with the first face image set is present among the each second face image set, a second party photo set corresponding to the second face image set weakly correlated with the first face image set.

The determining whether a second face image set weakly correlated with the first face image set is present among the each second face image set includes:
determining respectively, for the each second face image set, the number of identical face images between the second face image set and the first face image set; and
determining that the second face image set is weakly correlated with the first face image set if the number of the identical face images is smaller than a preset number threshold and an occurrence number of the identical face images is smaller than a preset occurrence number threshold.

Based on correlation screening and processing of each face image set corresponding to the each second party photo set and a face image set corresponding to the first party photo set, a weakly correlated second party photo set can be deleted from the to-be-shared party photo set, thereby further ensuring the accuracy and reliability of finally shared party photos.

Further, after the sending the to-be-shared party photo set to the initiator and the each contact respectively corresponding to the each second party photo set according to contact information of the initiator and contact information of the each contact respectively corresponding to the each second party photo set recorded in the first contact list, the method further includes:
respectively acquiring each second contact list corresponding to the each contact user account;
marking, in the first contact list and the each second contact list, each contact corresponding to the each second party photo set and the initiator;
respectively matching each face image contained in the first face image set and in the each second face image set with each photo of each contact not marked in the first contact list and in the each second contact list to determine whether a matched photo of a target contact is present; and
sending the to-be-shared party photo set to the target contact according to contact information corresponding to the photo of the target contact if the matched photo of the target contact is present.

In the foregoing solution, by marking each contact in the received to-be-shared party photo set and the initiator and by matching each face image in the each face image set corresponding to the to-be-shared party photo set with each photo of each contact not marked in the contact list of the initiator and the each foregoing contact, omission of any party participant can be avoided, thereby further ensuring the accuracy and reliability in sharing party photos.

According to a second aspect of the embodiments of the present disclosure, a photo sharing device is provided, including:
a first receiving module, configured to receive a party photo sharing request sent by a terminal of an initiator, where the party photo sharing request includes a party marker and an initiator user account;
a first acquiring module, configured to acquire, from a cloud album corresponding to the initiator user account, a first party photo set corresponding to the party marker;
a second acquiring module, configured to acquire, according to each contact contained in a first contact list corresponding to the initiator user account, each second party photo set marked with the party marker and each contact respectively corresponding to the each second party photo set;
a third acquiring module, configured to acquire a to-be-shared party photo set including the first party photo set and the each second party photo set; and
a sending module, configured to send the to-be-shared party photo set to the initiator and the each contact respectively corresponding to the each second party photo set according to contact information of the initiator and contact information of the each contact respectively corresponding to the each second party photo set recorded in the first contact list.

The second acquiring module includes:
a first determining submodule, configured to respectively determine each contact user account corresponding to the each contact contained in the first contact list;
a second determining submodule, configured to respectively determine whether a second party photo set marked with the party marker is present in a cloud album corresponding to the each contact user account; and
an acquiring submodule, configured to acquire, if the second party photo set marked with the party marker is present, the each second party photo set, and determine the each contact respectively corresponding to the each second party photo set according to the first contact list.

Further, the device also includes:
a second receiving module, configured to receive a storage request sent by a user terminal, where the storage request includes a to-be-stored party photo set marked with a party marker and a user account; and
a storing module, configured to store the to-be-stored party photo set in a cloud album corresponding to the user account.

After the photo sharing device receives a party photo sharing request carrying a user account and a party marker sent by a certain party participant (referred to as an initiator), in one hand, a first party photo set corresponding to the party marker is acquired from a cloud album corresponding to the initiator user account; in the other hand, each second party photo set corresponding to the party marker is acquired from each cloud album of each contact according to the each contact contained in a first contact list corresponding to the initiator user account, and each contact corresponding to the each second party photo set is respectively determined according to the first contact list. Finally, the to-be-shared party photo set including the first party photo set and the each second party photo set is sent to the initiator and each contact respectively corresponding to the each second party photo set according to contact information of the initiator and contact information of the each contact respectively corresponding to the each second party photo set recorded in the first contact list, thereby implementing sharing of party photos and improving the efficiency in sharing the party photos.

Further, the device also includes:
a fourth acquiring module, configured to acquire, by means of face recognition, a first face image set contained in the first party photo set in the to-be-shared party photo set and each second face image set respectively contained in the each second party photo set;
a determining module, configured to determine whether a second face image set weakly correlated with the first face image set is present among the each second face image set; and
a deleting module, configured to delete, from the to-be-shared party photo set, if the second face image set weakly correlated with the first face image set is present among the each second face image set, a second party photo set corresponding to the second face image set weakly correlated with the first face image set.

Optionally, the determining module includes:
a third determining submodule, configured to determine respectively, for the each second face image set, the number of identical face images between the second face image set and the first face image set; and
a fourth determining submodule, configured to determine that the second face image set is weakly correlated with the first face image set if the number of the identical face images is smaller than a preset number threshold and an occurrence number of the identical face images is smaller than a preset occurrence number threshold.

Based on correlation screening and processing of each face image set corresponding to the each second party photo set and a face image set corresponding to the first party photo set, a weakly correlated second party photo set can be deleted from the to-be-shared party photo set, thereby further ensuring the accuracy and reliability of finally shared party photos.

Further, the device also includes:
a fifth acquiring module, configured to respectively acquire each second contact list corresponding to the each contact user account;
a marking module, configured to mark, in the first contact list and the each second contact list, each contact corresponding to the each second party photo set and the initiator;
a matching module, configured to respectively match each face image contained in the first face image set and in the each second face image set with each photo of each contact not marked in the first contact list and in the each second contact list to determine whether a matched photo of a target contact is present; and
a second sending module, configured to send the to-be-shared party photo set to the target contact according to contact information corresponding to the photo of the target contact if the matched photo of the target contact is present.

In the foregoing solution, by marking each contact in the received to-be-shared party photo set and the initiator and by matching each face image in the each face image set corresponding to the to-be-shared party photo set with a photo of each contact not marked in the contact list of the initiator and the each foregoing contact, any party participant can be avoided omitting, thereby further ensuring the accuracy and reliability in sharing party photos.

According to a third aspect of the embodiments of the present disclosure, a photo sharing device is provided, including:
a processor; and
a memory configured to store instructions executable by the processor;
the processor is configured to perform:
   receiving a party photo sharing request sent by a terminal of an initiator, where the party photo sharing request includes a party marker and an initiator user account;
   acquiring, from a cloud album corresponding to the initiator user account, a first party photo set corresponding to the party marker;
   acquiring, according to each contact contained in a first contact list corresponding to the initiator user account, each second party photo set marked with the party marker and each contact respectively corresponding to the each second party photo set;
   acquiring a to-be-shared party photo set including the first party photo set and the each second party photo set; and
   sending the to-be-shared party photo set to the initiator and the each contact respectively corresponding to the each second party photo set according to contact information of the initiator and contact information of the each contact respectively corresponding to the each second party photo set recorded in the first contact list.

According to a fourth aspect of the embodiment of the present disclosure, there is provided a computer program which, when being executed on a processor of a terminal device, performs any of the above methods.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 illustrates a flowchart of Embodiment I of a photo sharing method according to an exemplary embodiment;
FIG. 2 illustrates a flowchart of Embodiment II of a photo sharing method according to an exemplary embodiment;
FIG. 3 illustrates a flowchart of Embodiment III of a photo sharing method according to an exemplary embodiment;
FIG. 4 illustrates a flowchart of Embodiment IV of a photo sharing method according to an exemplary embodiment;
FIG. 5 illustrates a block diagram of Embodiment I of a photo sharing device according to an exemplary embodiment;
FIG. 6 illustrates a block diagram of Embodiment II of a photo sharing device according to an exemplary embodiment;
FIG. 7 illustrates a block diagram of Embodiment III of a photo sharing device according to an exemplary embodiment;
FIG. 8 illustrates a block diagram of Embodiment IV of a photo sharing device according to an exemplary embodiment;
FIG. 9 illustrates a block diagram of a photo sharing device shown according to an exemplary embodiment; and
FIG. 10 illustrates a block diagram of another photo sharing device according to an exemplary embodiment.

Specific embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

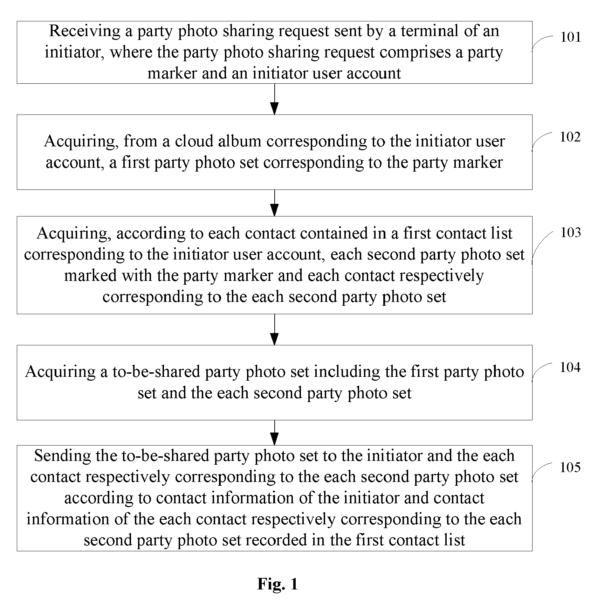

FIG. 1 illustrates a flowchart of Embodiment I of a photo sharing method according to an exemplary embodiment. The method may be executed by a photo sharing device which may be integrated into a cloud server. As shown in FIG. 1, the photo sharing method includes the following steps.

In Step 101, it is received a party photo sharing request sent by a terminal of an initiator, where the party photo sharing request includes a party marker and an initiator user account.

In this embodiment, it is assumed that in the party, A, B, C and D respectively take some photos which are referred to as party photos. Moreover, any photographed party photo may be marked with a party marker when it is marked or named. The party marker includes information such as time, a site, party scene or the like, where the time information may be automatically determined according to a clock of the user terminal, the site may be determined according to GPS location information of the user terminal, and the party scene may be a specific name of a party place, such as a certain park or a certain playground, etc. For a same party, the information such as time, the site and place may be identical. Therefore, it is assumed that photos respectively photographed by A, B, C and D are marked with a same party marker.

In addition, in the embodiments of the present disclosure, it is assumed that each user may upload and store data contents (such as a contact list, photos, and the like) stored in the user terminal into the cloud server. For this purpose, each user may register and obtain a user account in the cloud server, and correspondingly the cloud server may allocate certain memory space for each registered user to store data contents related to the user.

In this embodiment, the foregoing initiator is one person of A, B, C and D, and it is assumed that the initiator is A who initiators the sharing and processing of party photos, i.e., the initiator A gathers party photos respectively photographed by the four persons in the same party and sends these photos to the four persons.

For example, an APP for sharing party photos may be installed in a terminal, and the foregoing initiator may start the APP in the terminal thereof, and input the user account thereof and the party marker of the to-be-shared party photo set. In this way, the terminal is initiated to send, to the cloud server, a party photo sharing request carrying the initiator user account and the party marker.

In Step 102, a first party photo set corresponding to the party marker is acquired from a cloud album corresponding to the initiator user account.

After the foregoing party photo sharing request is received, the party photo set (i.e., the first party photo set) marked with the foregoing party marker is acquired from the cloud album corresponding to the initiator user account.

In Step 103, each second party photo set marked with the party marker and each contact respectively corresponding to the each second party photo set are acquired according to each contact contained in a first contact list corresponding to the initiator user account.

Then, the contact list (i.e., the foregoing first contact list) of the initiator corresponding to the initiator user account is acquired, in which there is recorded information of each contact of the initiator, including the name and contact information of the each contact, etc.

The each contact in the foregoing first contact list is obtained because party participants joining the same party generally are friends familiar with each other and are contacts for each other. In this way, party photos (i.e., each second party photo set marked with the foregoing party marker) photographed by other party participants in the same party are obtained from the cloud album corresponding to the user account of the each contact according to the each contact contained in the first contact list corresponding to the initiator user account.

Specifically, the foregoing Step 103 may be implemented in the following way.

After the each contact contained in the first contact list corresponding to the initiator user account is obtained, each contact user account corresponding to the each contact in the first contact list can be determined according to a corresponding relation between the each contact user account and each contact name or contact information recorded in advance;

then, it is respectively determined whether a party photo set (i.e., the foregoing second party photo set) marked with the party marker in the foregoing party photo sharing request is present in the cloud album corresponding to the each contact user account. If the second party photo set marked with the foregoing party marker is present corresponding to a certain contact user account, the second party photo set and a contact (i.e., the contact that is in the first contact list and is corresponding to the contact user account) corresponding to the contact user account are acquired.

In Step 104, it is acquired the to-be-shared party photo set including the first party photo set and the each second party photo set.

In Step 105, the to-be-shared party photo set is sent to the initiator and the each contact respectively corresponding to the each second party photo set according to contact information of the initiator and contact information of the each contact respectively corresponding to the each second party photo set recorded in the first contact list.

By means of the foregoing processing manner, based on the each contact in the first contact list and the party marker, other party photo sets marked with the party marker and the contact corresponding to each party photo set are obtained.

In other words, as to the above example, finally there are obtained the first party photo set (denoted by Set 1) corresponding to the initiator A, the second party photo set (denoted by Set 2) corresponding to the contact B, the second party photo set (denoted by Set 3) corresponding to the contact C, and the second party photo set (denoted by Set 4) corresponding to the contact D. Herein, B, C and D are present in the contact list of A, and Set 1-Set 4 have the same party marker as mentioned above.

Thus, the foregoing first party photo set (Set 1) and the each second party photo set (Set 2, Set 3 and Set 4) are gathered to form the to-be-shared party photo set, and the to-be-shared party photo set is respectively sent to A, B, C and D.

Specifically, because contact information of A, B, C and D is recorded in the contact list of the initiator A, the to-be-shared party photo set can be respectively sent to A, B, C and D according to the contact information.

In this embodiment, after a party photo sharing request carrying a user account and a party marker sent by a certain party participant (the initiator) is received, in one hand, a first party photo set corresponding to the party marker is acquired from a cloud album corresponding to the initiator user account; in the other hand, each second party photo set corresponding to the party marker is acquired from each cloud album of each contact according to the each contact contained in a first contact list corresponding to the initiator user account, and the each contact corresponding to the each second party photo set is respectively determined according to the first contact list. Finally, the to-be-shared party photo set including the first party photo set and the each second party photo set is sent to the initiator and the each contact respectively corresponding to the each second party photo set according to contact information of the initiator and contact information of the each contact respectively corresponding to the each second party photo set recorded in the first contact list, thereby implementing sharing of party photos and improving the efficiency in sharing the party photos.

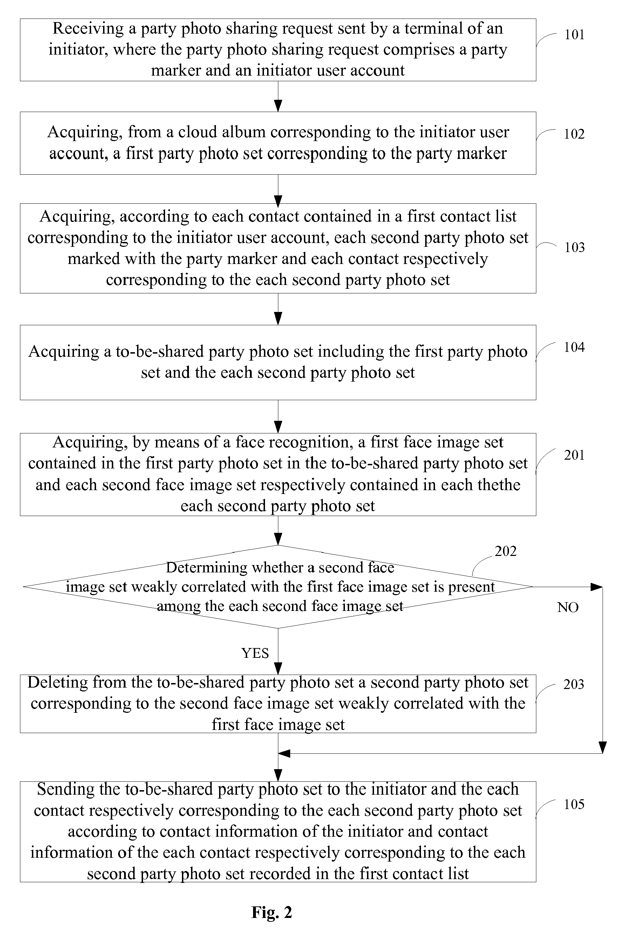

With reference to the foregoing example, in a practical application, the following special case may appear: it is probably just a coincidence that the party photo set marked with the foregoing party marker is present in the cloud albums of B, C and D. For example, A, B and C participate in a party, in the same place and at the same time D and other persons (excluding A, B and C) also participate in another party, in other words, the to-be-shared party photo set corresponding to the party of A, B and C should not contain a party photo set marked by D with the same party marker. In this special case, the embodiments of the present disclosure provide a solution as shown in FIG. 2.

FIG. 2 illustrates a flowchart of Embodiment II of a photo sharing method according to an exemplary embodiment. As shown in FIG. 2, in this embodiment, after the Step 104 of the embodiment as shown in FIG. 1, following steps are also included.

In Step 201, it is acquired, by means of face recognition, a first face image set contained in the first party photo set in the to-be-shared party photo set and each second face image set respectively contained in the each second party photo set.

In Step 202, it is determined whether a second face image set weakly correlated with the first face image set is present among the each second face image set, and Step 203 is executed if a second face image set weakly correlated with the first face image set is present among the each second face image set, otherwise, Step 105 is directly executed.

In Step 203, it is deleted from the to-be-shared party photo set, the second party photo set corresponding to the second face image set weakly correlated with the first face image set.

First of all, a face recognition processing is performed on each party photo in the first party photo set by using face recognition technology to obtain the first face image set that consists of each face image contained in the first party photo set, and a face recognition processing is performed on each party photo in the each second party photo set by using the face recognition technology to obtain the each second face image set corresponding to the each second party photo set.

Then, it is determined whether the each second face image set is weakly correlated with the first face image set.

Specifically, it is determined whether the each second face image set is weakly correlated with the first face image set in the following way:
it is determined respectively, for the each second face image set, the number of identical face images between the second face image set and the first face image set; and
it is determined that a second face image set is weakly correlated with the first face image set if the number of the identical face images is smaller than a preset number threshold and a occurrence number of the identical face images is smaller than a preset occurrence number threshold.

Taking an example in allusion to the foregoing special case, it is assumed that the initiator A corresponds to a first face image set A1, the contact B corresponds to a second face image set B1, the contact C corresponds to a second face image set C1, and the contact D corresponds to a second face image set D1. Supposing multiple face images identical to some face images in A1 are stored in B1 and C1, and the occurrence number of the identical face images is greater than the preset occurrence number threshold, it is determined that B1 and C1 are strongly correlated with A1, which indicates that A, B and C participate in the same party. Contrarily, if the number of the identical face images between D1 and A1 is smaller than the preset number threshold and the occurrence number of the identical face images is smaller than the preset occurrence number threshold, it is determined that D1 is weakly correlated with A1, which indicates that D and A participate in different parties.

In this way, the party photo set corresponding to D is deleted from the to-be-shared party photo set consists of each party photo set marked with the same party marker that is respectively corresponding to A, B, C and D and that is composed of. Afterward, the to-be-shared party photo set in which the party photo set corresponding to D is removed is sent to A, B and C according to contact information of A, B and C recorded in the first contact list of the initiator A.

In this embodiment, based on correlation screening and processing of the each face image set corresponding to the each party photo set, those weakly correlated party photo sets can be deleted from the to-be-shared party photo set, thereby ensuring the accuracy and reliability of finally shared party photos.

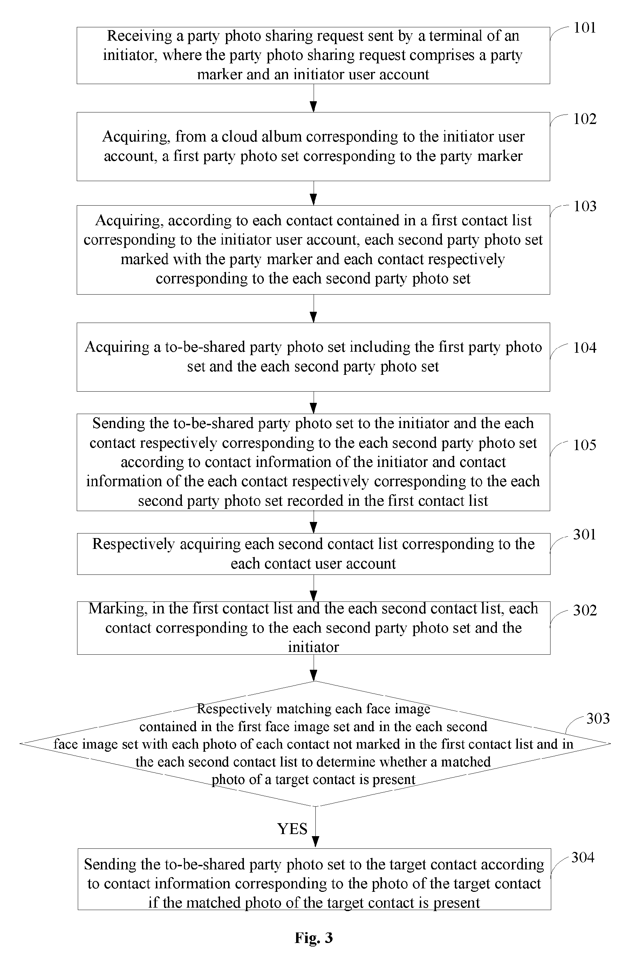

In a practical application, there may be another special case: it is assumed that A, B, C and E participate in a certain party, A is the initiator and E fails to take a party photo, thus no party photo set marked with the foregoing party marker is present in the cloud album of E, and it is assumed that B and C are present in the contact list of the initiator A but E is not. Based on the processing of the foregoing embodiments, supposing the to-be-shared party photo set includes the first party photo set corresponding to A and the second party photo sets respectively corresponding to B and C, and based on contact information of A, B and C recorded in the contact list of the initiator A, the to-be-shared party photo set can be sent to A, B and C rather than E because contact information of E is absent from the contact list of the initiator A. In order to avoid the foregoing case in which the to-be-shared party photo set cannot be sent to E, with reference to the embodiment as shown in FIG. 3, the following solution is provided.

FIG. 3 illustrates a flowchart of Embodiment III of a photo sharing method according to an exemplary embodiment. As shown in FIG. 3, in this embodiment, based on the embodiment as shown in FIG. 2, after the Step 105, the following steps are also included.

In Step 301, it is respectively acquired each second contact list corresponding to each contact user account.

A contact corresponding to the foregoing contact user account refers to a contact for which the foregoing second party photo set is present in the cloud album thereof

After it is acquired the user account of the contact for which a second party photo set is present by means of the manner described in the foregoing embodiments, the each corresponding second contact list is respectively obtained from the each contact user account.

In Step 302, it is marked, in the first contact list and the each second contact list, each contact corresponding to the each second party photo set and the initiator.

In the above example, it is assumed that the first contact list of the initiator A includes A, B and C, the second contact list of the contact B includes A, B, C and E, and the second contact list of the contact C includes A, B, C and F. In addition, the each foregoing contact list not only includes the name and contact information for each contact, but also includes a photo of the contact, for example, a photo sticker.

Based on the description of the foregoing embodiments, after it is determined that the to-be-shared party photo set includes each strongly correlated party photo set obtained from the cloud albums of A, B and C, the to-be-shared party photo set is sent to A, B and C according to contact information of A, B and C included in the first contact list of A. Thereafter, in the contact lists corresponding to A, B and C, each user corresponding to each party photo set in the to-be-shared party photo set is respectively marked, i.e., A, B and C are respectively marked. In other words, A, B and C are respectively marked in the first contact list of the initiator A and the second contact lists of contacts B and C. Remaining contacts not marked include the contact E in B and the contact F in C.

In Step 303, each face image contained in the first face image set and in the each second face image set is respectively matched with a photo of each contact not marked in the first contact list and in the each second contact list to determine whether a matched photo of a target contact is present, Step 304 is executed if the target contact photo is present, otherwise, it is over.

In Step 304, the to-be-shared party photo set is sent to the target contact according to contact information corresponding to the photo of the target contact.

In the foregoing embodiment as shown in FIG. 2, face image sets (i.e., the foregoing first face image set and each second face image set) corresponding to each party photo set in the to-be-shared party photo set are recognized and obtained by using the face recognition technology. In the foregoing example, E fails to take any party photo; however, other party participants A, B and C may take an image of E in their photographed party photos. Moreover, although E is absent from the contact list of the initiator A, E may be present in the contact lists of other contacts (contacts having the second party photo set) of A.

Therefore, in this embodiment, each face image contained in the first face image set and in the each second face image set is respectively matched with a photo of each contact not marked in the first contact list of the initiator A and in the each second contact list of contacts B and C to determine whether a matched photo of a target contact is present,

In the above example, only contacts E and F are not marked, thus the each foregoing face image is matched with photos of E and F, i.e., a similarity measure of face features is carried out to determine whether a face image matched with E or F is present among each face image.

If the foregoing face image contains the image of E, by means of matching processing, it is determined that the face image containing E is matched with the photo of the contact E of B, and it is determined that the contact E is also the target contact which requires the to-be-shared party photo set to be sent to. In this way, the to-be-shared party photo set can be sent to E according to contact information of E recorded in the contact list of B.

In this embodiment, after the to-be-shared party photo set is sent to the corresponding contact according to contact information of each contact recorded in the contact list of the initiator, by marking each contact in the received to-be-shared party photo set and the initiator and by matching the face image set corresponding to the to-be-shared party photo set with a photo of each contact not marked in the contact list of the initiator and the each foregoing contact, omission of any party participant can be avoided, thereby ensuring the accuracy and reliability in sharing party photos.

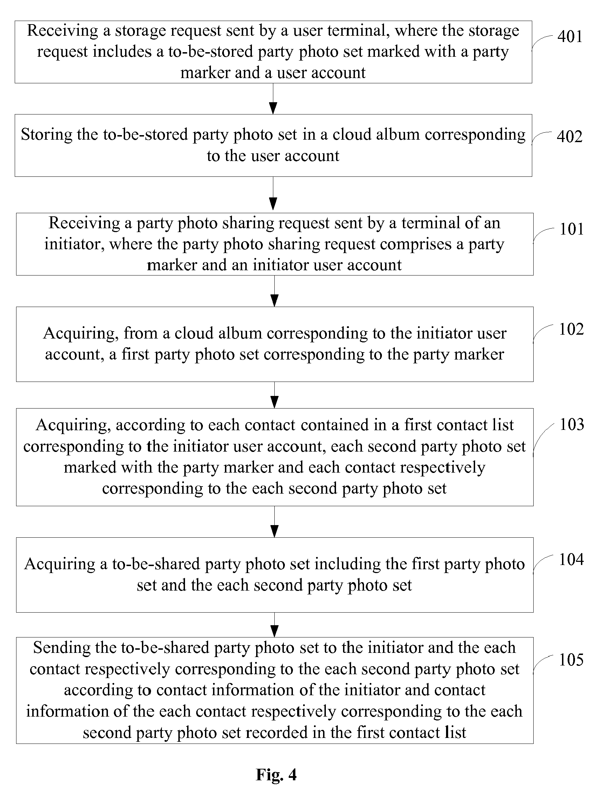

FIG. 4 illustrates a flowchart of Embodiment IV of a photo sharing method according to an exemplary embodiment. As shown in FIG. 4, based on the foregoing embodiments, before the Step 101 the following steps are also included.

In Step 401, a storage request sent by a user terminal is received, where the storage request includes a to-be-stored party photo set marked with a party marker and a user account.

In Step 402, the to-be-stored party photo set is stored in the cloud album corresponding to the user account.

In this embodiment, it is assumed that each user registers a user account in the cloud server to enable cloud storage for data contents (such as a contact list, a photo, an audio/video or the like) stored in the terminal.

After a party, when a certain user wants to send a photographed party photo set (i.e., several party photos) to a cloud album corresponding to the user account at the cloud server for storage, first of all, the user needs to name or mark the party photo set. Specifically, the party photo set may be organized into a folder in which party photos photographed by the user in this party are stored. The folder may be named after a party marker, the specific composition of the party marker is described in the foregoing embodiments, which is not repeated any more herein.

Thus, after the user initiators a cloud storage processing by selecting the to-be-stored party photo set (i.e., the foregoing folder), the user terminal sends, to the cloud server, a storage request carrying the to-be-stored party photo set and the user account, so that the cloud server can store the to-be-stored party photo set marked with the party marker into the cloud album corresponding to the user account.

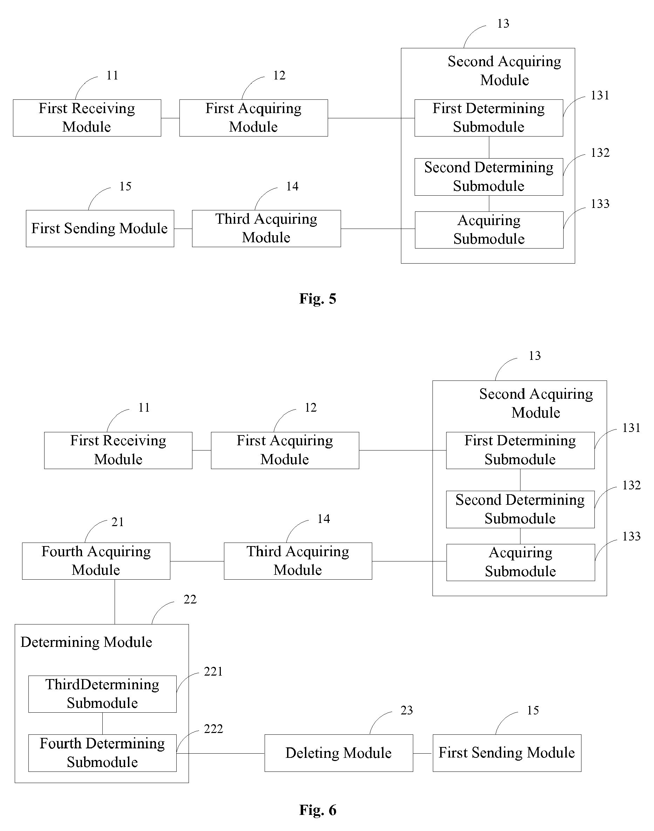

FIG. 5 illustrates a block diagram of Embodiment I of a photo sharing device according to an exemplary embodiment. As shown in FIG. 5, the photo sharing device includes: a first receiving module 11, a first acquiring module 12, a second acquiring module 13, a third acquiring module 14 and a first sending module 15.

The first receiving module 11 is configured to receive a party photo sharing request sent by a terminal of an initiator, where the party photo sharing request includes a party marker and an initiator user account.

The first acquiring module 12 is configured to acquire, from a cloud album corresponding to the initiator user account, a first party photo set corresponding to the party marker.

The second acquiring module 13 is configured to acquire, according to each contact contained in a first contact list corresponding to the initiator user account, each second party photo set marked with the party marker and each contact respectively corresponding to the each second party photo set.

The third acquiring module 14 is configured to acquire a to-be-shared party photo set including the first party photo set and the each second party photo set.

The first sending module 15 is configured to send the to-be-shared party photo set to the initiator and the each contact respectively corresponding to the each second party photo set according to contact information of the initiator and contact information of the each contact respectively corresponding to the each second party photo set recorded in the first contact list.

In an embodiment, the second acquiring module 13 includes: a first determining submodule 131, a second determining submodule 132 and an acquiring submodule 133.

The first determining submodule 131 is configured to respectively determine each contact user account corresponding to the each contact contained in the first contact list.

The second determining submodule 132 is configured to respectively determine whether a second party photo set marked with the party marker is present in a cloud album corresponding to the each contact user account.

The acquiring submodule 133 is configured to acquire, if the second party photo set marked with the party marker is present, the each second party photo set, and determine the each contact respectively corresponding to the each second party photo set according to the first contact list.

FIG. 6 illustrates a block diagram of Embodiment II of a photo sharing device according to an exemplary embodiment. As shown in FIG. 6, on the basis of the embodiment as shown in FIG. 5, the photo sharing device further includes: a fourth acquiring module 21, a determining module 22 and a deleting module 23.

The fourth acquiring module 21 is configured to acquire, by means of face recognition, a first face image set contained in the first party photo set in the to-be-shared party photo set and each second face image set respectively contained in the each second party photo set.

The determining module 22 is configured to determine whether a second face image set weakly correlated with the first face image set is present among the each second face image set.

The deleting module 23 is configured to delete, from the to-be-shared party photo set, if a second face image set weakly correlated with the first face image set is present among the each second face image set, the second party photo set corresponding to the second face image set weakly correlated with the first face image set.

In an embodiment, the determining module 22 includes: a third determining submodule 221 and a fourth determining submodule 222.

The third determining submodule 221 is configured to determine respectively, for the each second face image set, the number of identical face images between the second face image set and the first face image set.

The fourth determining submodule 222 is configured to determine that a second face image set is weakly correlated with the first face image set if the number of the identical face images is smaller than a preset number threshold and an occurrence number of the identical face images is smaller than a preset occurrence number threshold.

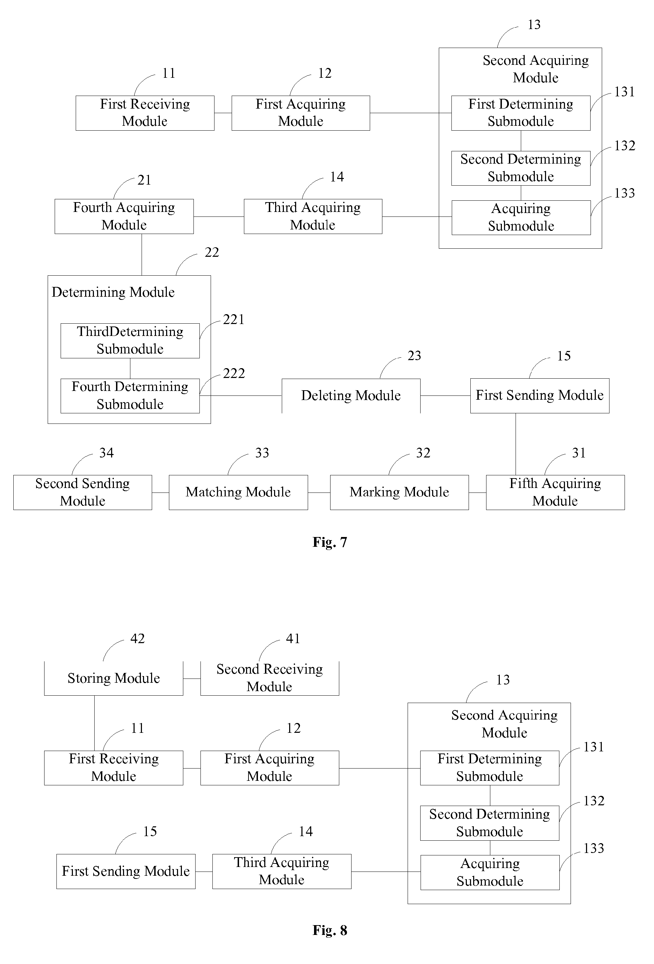

FIG. 7 illustrates a block diagram of Embodiment III of a photo sharing device according to an exemplary embodiment. As shown in FIG. 7, on the basis of the embodiment as shown in FIG. 6, the device further includes: a fifth acquiring module 31, a marking module 32, a matching module 33 and a second sending module 34.

The fifth acquiring module 31 is configured to respectively acquire each second contact list corresponding to the each contact user account.

The marking module 32 is configured to mark, in the first contact list and the each second contact list, each contact corresponding to the each second party photo set and the initiator.

The matching module 33 is configured to respectively match each face image contained in the first face image set and in the each second face image set with a photo of each contact not marked in the first contact list and in the each second contact list to determine whether a matched photo of a target contact is present.

The second sending module 34 is configured to send the to-be-shared party photo set to the target contact according to contact information corresponding to the photo of the target contact if the matched photo of the target contact is present.

FIG. 8 illustrates a block diagram of Embodiment IV of a photo sharing device according to an exemplary embodiment. As shown in FIG. 8, on the basis of the foregoing embodiment, the device further includes: a second receiving module 41 and a storing module 42.

The second receiving module 41 is configured to receive a storage request sent by a user terminal, where the storage request includes a to-be-stored party photo set marked with a party marker and a user account.

The storing module 42 is configured to store the to-be-stored party photo set in a cloud album corresponding to the user account.

With respect to the photo sharing device in the above embodiments, detailed description of specific manners for modules and submodules to execute an operation has been made in the embodiments related to the method, thus no elaboration will be made herein. Moreover, where functional modules are referred to for carrying out various steps of the described method(s), it will be understood that these modules may be implemented in hardware, in software, or a combination of both. When implemented in hardware, the modules may be implemented as one or more hardware modules, such as one or more application specific integrated circuits. When implemented in software, the modules may be implemented as one or more computer programs that are executed on one or more processors.

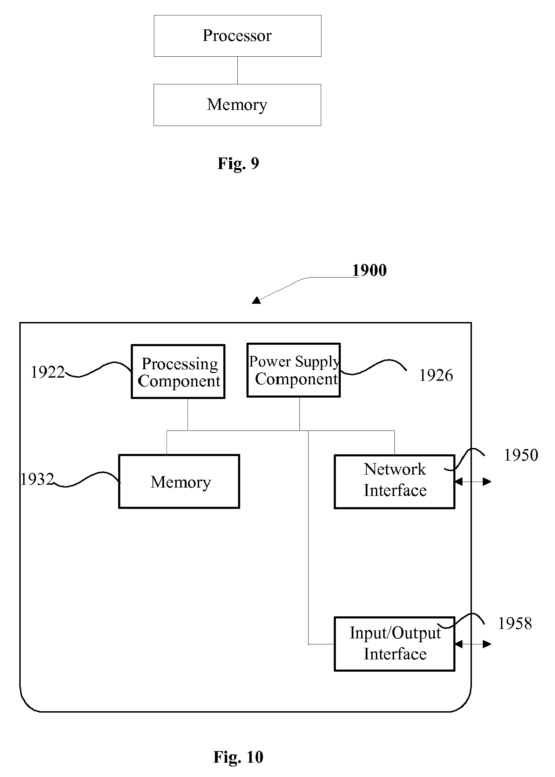

The above embodiments illustrate the internal function and structure of the photo sharing device. As shown in FIG. 9, in practice, the photo sharing device may be implemented as:
a processor; and
a memory configured to store instructions executable by the processor;
where the processor is configured to:
   receive a party photo sharing request sent by a terminal of an initiator, where the party photo sharing request includes a party marker and an initiator user account;
   acquire, from a cloud album corresponding to the initiator user account, a first party photo set corresponding to the party marker;
   acquire, according to each contact contained in a first contact list corresponding to the initiator user account, each second party photo set marked with the party marker and each contact respectively corresponding to the each second party photo set;
   acquire a to-be-shared party photo set including the first party photo set and the each second party photo set; and
   send the to-be-shared party photo set to the initiator and the each contact respectively corresponding to the each second party photo set according to contact information of the initiator and contact information of the each contact respectively corresponding to the each second party photo set recorded in the first contact list.

In the above embodiments, after the photo sharing device receives a party photo sharing request carrying a user account and a party marker sent by a certain party participant (referred to as an initiator), in one hand, a first party photo set corresponding to the party marker is acquired from a cloud album corresponding to the initiator user account; in the other hand, each second party photo set corresponding to the party marker is acquired from each cloud album of each contact according to the each contact contained in a first contact list corresponding to the initiator user account, and the each contact corresponding to the each second party photo set is respectively determined according to the first contact list. Finally, the to-be-shared party photo set including the first party photo set and the each second party photo set is sent to the initiator and the each contact respectively corresponding to the each second party photo set according to contact information of the initiator and contact information of the each contact respectively corresponding to the each second party photo set recorded in the first contact list, thereby implementing sharing of party photos and improving the efficiency in sharing the party photos.

FIG. 10 illustrates a block diagram of another photo sharing device according to an exemplary embodiment. For example, the device 1900 may be provided as a server. Referring to FIG. 10, the device 1900 includes a processing component 1922 which further includes one or more processors, and memory resource represented by a memory 1932 and configured to store instructions that can be executed by the processor component 1922, for example, an application program. The application program stored in the memory 1932 may include one or more modules each of which is corresponding to a set of instructions. In addition, the processor component 1922 is configured to execute instructions so as to execute the foregoing method:
receiving a party photo sharing request sent by a terminal of an initiator, where the party photo sharing request includes a party marker and an initiator user account;
acquiring, from a cloud album corresponding to the initiator user account, a first party photo set corresponding to the party marker;
acquiring, according to each contact contained in a first contact list corresponding to the initiator user account, each second party photo set marked with the party marker and the each contact respectively corresponding to the each second party photo set;
acquiring a to-be-shared party photo set including the first party photo set and the each second party photo set; and
sending the to-be-shared party photo set to the initiator and the each contact respectively corresponding to the each second party photo set according to contact information of the initiator and contact information of the each contact respectively corresponding to the each second party photo set recorded in the first contact list.

The device 1900 may also include a power supply component 1926 configured to execute the power management of the device 1900, a wired or wireless network interface 1950 configured to connect the device 1900 to the network, and an input/output (I/O) interface 1958. The device 1900 can operate an operating system based on and stored in the memory 1932, for example, Windows Server™, Mac OS X™, Unix™, Linux™, FreeBSD™ or other similar operating systems.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A photo sharing method, **characterized in** comprising:
receiving (101) a party photo sharing request sent by a terminal of an initiator, wherein the party photo sharing request comprises a party marker and an initiator user account;
acquiring (102), from a cloud album corresponding to the initiator user account, a first party photo set corresponding to the party marker;
acquiring (103), according to each contact contained in a first contact list corresponding to the initiator user account, each second party photo set marked with the party marker and each contact respectively corresponding to the each second party photo set;
acquiring (104) a to-be-shared party photo set comprising the first party photo set and the each second party photo set; and
sending (105) the to-be-shared party photo set to the initiator and the each contact respectively corresponding to the each second party photo set according to contact information of the initiator and contact information of the each contact respectively corresponding to the each second party photo set recorded in the first contact list.

2. The method of claim 1, wherein, the acquiring, according to each contact contained in a first contact list corresponding to the initiator user account, each second party photo set marked with the party marker and each contact respectively corresponding to the each second party photo set comprises:
respectively determining each contact user account corresponding to the each contact contained in the first contact list;
respectively determining whether a second party photo set marked with the party marker is present in a cloud album corresponding to the each contact user account; and
acquiring, if the second party photo set marked with the party marker is present, the each second party photo set, and determining each contact respectively corresponding to the each second party photo set according to the first contact list.

3. The method of claim 2, wherein after the acquiring a to-be-shared party photo set comprising the first party photo set and the second party photo set, the method further comprises:
acquiring (201), by means of face recognition, a first face image set contained in the first party photo set in the to-be-shared party photo set and each second face image set respectively contained in the each second party photo set;
determining (202) whether a second face image set weakly correlated with the first face image set is present among the each second face image set; and
deleting (203) from the to-be-shared party photo set, if the second face image set weakly correlated with the first face image set is present among the each second face image set, a second party photo set corresponding to the second face image set weakly correlated with the first face image set.

4. The method of claim 3, wherein the determining whether a second face image set weakly correlated with the first face image set is present among the each second face image set comprises:
determining respectively, for the each second face image set, a number of identical face images between the second face image set and the first face image set; and
determining that the second face image set is weakly correlated with the first face image set if the number of the identical face images is smaller than a preset number threshold and an occurrence number of the identical face images is smaller than a preset occurrence number threshold.

5. The method of claim 3, wherein after the sending the to-be-shared party photo set to the initiator and the each contact respectively corresponding to the each second party photo set according to contact information of the initiator and contact information of the each contact respectively corresponding to the each second party photo set recorded in the first contact list, the method further comprises:
respectively (301) obtaining each second contact list corresponding to the each contact user account;
marking (302), in the first contact list and the each second contact list, each contact corresponding to the each second party photo set and the initiator;
respectively matching (303) each face image contained in the first face image set and in the each second face image set with each photo of each contact not marked in the first contact list and in the each second contact list to determine whether a matched photo of a target contact is present; and
sending (304) the to-be-shared party photo set to the target contact according to contact information corresponding to the photo of the target contact if the matched photo of the target contact is present.

6. The method of any of claims 1-5, wherein the method further comprises:
receiving (401) a storage request sent by a user terminal, wherein the storage request comprises a to-be-stored party photo set marked with a party marker and a user account; and
storing (402) the to-be-stored party photo set in a cloud album corresponding to the user account.

7. A photo sharing device, **characterized by** comprising:
a first receiving module (11), configured to receive a party photo sharing request sent by a terminal of an initiator, wherein the party photo sharing request comprises a party marker and an initiator user account;
a first acquiring module (12), configured to acquire, from a cloud album corresponding to the initiator user account, a first party photo set corresponding to the party marker;
a second acquiring module (13), configured to acquire, according to each contact contained in a first contact list corresponding to the initiator user account, each second party photo set marked with the party marker and each contact respectively corresponding to the each second party photo set;
a third acquiring module (14), configured to acquire a to-be-shared party photo set comprising the first party photo set and the each second party photo set; and
a first sending module (15), configured to send the to-be-shared party photo set to the initiator and the each contact respectively corresponding to the each second party photo set according to contact information of the initiator and contact information of the each contact respectively corresponding to the each second party photo set recorded in the first contact list.

8. The device of claim 7, wherein the second acquiring module comprises:
a first determining submodule (131), configured to respectively determine each contact user account corresponding to the each contact contained in the first contact list;
a second determining submodule (132), configured to respectively determine whether a second party photo set marked with the party marker is present in a cloud album corresponding to the each contact user account; and
an acquiring submodule (133), configured to acquire, if the second party photo set marked with the party marker is present, the each second party photo set, and determine the each contact respectively corresponding to the each second party photo set according to the first contact list.

9. The device of claim 8, wherein the device further comprises:
a fourth acquiring module (21), configured to acquire, by means of face recognition, a first face image set contained in the first party photo set in the to-be-shared party photo set and each second face image set respectively contained in the each second party photo set;
a determining module (22), configured to determine whether a second face image set weakly correlated with the first face image set is present among the each second face image set; and
a deleting module (23), configured to delete from the to-be-shared party photo set, if the second face image set weakly correlated with the first face image set is present among the each second face image set, a second party photo set corresponding to the second face image set weakly correlated with the first face image set.

10. The device of claim 9, wherein the determination module comprises:
a third determining submodule (221), configured to determine respectively, for the each second face image set, a number of identical face images between the second face image set and the first face image set; and
a fourth determining submodule (222), configured to determine that the second face image set is weakly correlated with the first face image set if the number of the identical face images is smaller than a preset number threshold and an occurrence number of the identical face images is smaller than a preset occurrence number threshold.

11. The device of claim 9, wherein the device further comprises:
a fifth acquiring module (31), configured to respectively acquire each second contact list corresponding to the each contact user account;
a marking module (32), configured to mark, in the first contact list and the each second contact list, each contact corresponding to the each second party photo set and the initiator;
a matching module (33), configured to respectively match each face image contained in the first face image set and in the each second face image set with each photo of each contact not marked in the first contact list and in the each second contact list to determine whether a matched photo of a target contact is present; and
a second sending module (34), configured to send the to-be-shared party photo set to the target contact according to contact information corresponding to the photo of the target contact if the matched photo of the target contact is present.

12. The device of any of claims 7-11, wherein the device further comprises:
a second receiving module (41), configured to receive a storage request sent by a user terminal, wherein the storage request comprises a to-be-stored party photo set marked with a party marker and a user account; and
a storing module (42), configured to store the to-be-stored party photo set in a cloud album corresponding to the user account.

13. A computer program, which when executing on a processor of a terminal device, performs a method according to any of claim 1-6.
